# EUROPÄISCHE PATENTANMELDUNG

(11) **EP 4 763 414 A1**
(43) Veröffentlichungstag der Anmeldung: **24.06.2026**
(21) Anmeldenummer: 24221328.8
(22) Anmeldetag: 18.12.2024
(51) Int. Cl.: B23Q 17/00, B23B 31/117

(54) **VERFAHREN UND VORRICHTUNG ZUR ERMITTLUNG DER SPANNGÜTE BEIM SPANNPROZESS VON SCHNEIDWERKZEUGEN**

(71) Anmelder: Rego-Fix AG, 4456 Tenniken (CH)
(72) Erfinder: Zauta, Patrick, 4333 Münchwilen (CH); Weidmann, Lukas, 4133 Pratteln (CH)
(74) Vertreter: Braunpat AG

(57) **Zusammenfassung**

Die vorliegende Erfindung betrifft ein Verfahren sowie eine Vorrichtung zur Ermittlung der Spanngüte eines in einem Werkzeughalter aufgenommenen Werkzeugs, wobei das Werkzeug mittels einer Spanneinheit im Werkzeughalter gespannt wird und während des Spannvorgangs mittels einer Messvorrichtung ein zeitlicher Verlauf von zumindest einem Anlagenparameter aufgezeichnet wird, aus welchem zeitlichen Verlauf des zumindest einen Anlagenparameters die Spanngüte eines in einem Werkzeughalter aufgenommenen Werkzeugs ermittelbar ist.

## Beschreibung

### Technisches Gebiet der Erfindung

Die Erfindung betrifft ein Verfahren und eine Vorrichtung zur Ermittlung der Spanngüte eines reibschlüssig in einem Werkzeughalter aufgenommenen Werkzeugs.

### Stand der Technik

Bei der Zerspanung muss die Rotation einer Antriebsspindel auf ein Schneidwerkzeug übertragen werden, wobei das Schneidwerkzeug üblicherweise mittels geeigneten Spannmitteln, bzw. einem Werkzeughalter, gespannt und mechanisch mit der Antriebsspindel verbunden wird. Anschliessend führt die resultierende Relativbewegung zwischen Schneidwerkzeug und Werkstück dazu, dass Material in Form eines Spans abgetragen werden kann. Gleichzeitig werden das Schneidwerkzeug und die Spannmittel durch die im Zerspanungsprozess resultierenden Kräfte belastet und dahingehend beansprucht. Die Präzision, mit welcher die Rotationsbewegung der Antriebsspindel auf das Schneidwerkzeug übertragen werden kann, hat demnach einen entscheidenden Einfluss auf die Massgenauigkeit des zu fertigenden Bauteils. Ein Bewertungskriterium zur Beurteilung wie gut ein Schneidwerkzeug in einem Spanmittel vor dem Hintergrund eines Zerspanungsprozesses gespannt ist, ist die Spanngüte eines Spannmittels.

Die Spanngüte von Spannmitteln kann je nach Anwendung durch unterschiedliche Leistungsattribute beschrieben werden. Der Begriff «Spanngüte» dient dabei als Bewertungs- und Klassifizierungsmöglichkeit, um die Spannqualität von Spannmittel in Bezug auf die aus dem Zerspanungsprozess resultierenden Qualitätsanforderungen an ein Spannmittel und/oder das eingespannte Schneidwerkzeug zu beschreiben, respektive zu bewerten. Da sich die aus einem Zerspanungsprozess resultierenden Qualitätsanforderungen an ein Spannmittel je nach Fertigungssituation unterscheiden können, lässt sich die Spannqualität und damit die Spanngüte nicht allgemeingültig definieren. Mit dem Fokus auf Bohr- und Fräsoperationen wird die Spanngüte vereinfacht auf die folgenden Leistungsattribute beschränkt:
∘ Der minimale Rundlauffehler
∘ Das maximal übertragbare Drehmoment
∘ Die Auszugskraft

Der Rundlauf beschreibt die Gleichförmigkeit eines rotierenden Rundprofils. Punktuelle oder gesamtheitliche Abweichungen dieser Gleichförmigkeit werden als Rundlauffehler bezeichnet und haben bekannterweise einen (meist negativen) Einfluss auf den Zerspanungsprozess. Ein Rundlauffehler tritt auf, wenn die Drehachse des eingespannten Schneidwerkzeugs, des Spanmittels oder einer Kombination nicht mit derjenigen der Antriebseinheit übereinstimmt. Diesbezüglich muss berücksichtigt werden, dass die zur Beurteilung des Rundlaufs verwendete Referenzrichtung grundsätzlich willkürlich festgelegt werden kann, wodurch eine Antriebseinheit selbst bereits eine Winkelabweichung aufweisen kann. Während dem Zerspanungsprozess wird das Schneidwerkzeug und die Spannmittel infolge der resultierenden Zerspanungskräfte belastet und dadurch beansprucht. Bedingt durch die Rotationsbewegung der Spindel wird das Schneidwerkzeug in Abhängigkeit der Bearbeitungsstrategie vorwiegend durch Querkräfte und durch Torsion belastet. Durch die mechanische Kopplung zwischen Schneidwerkzeug und Spannmittel wird die Werkzeugbelastung an die angrenzenden Komponenten der Effektkette weitergegeben. Wird die Belastung so hoch, dass die mechanische Kopplung zwischen dem Schneidwerkzeug und dem Spannmittel nicht mehr ausreicht, um ersteres in Position zu halten, kommt es zu einer Relativbewegung (meist Gleitbewegung in Umfangsrichtung) und infolgedessen meist zu einem Werkzeugauszug. Das theoretische Drehmoment bei dem erstmalig ein Lösen des geklemmten Schneidwerkzeugs oder von anderen Komponenten des Spannmittels auftritt, wird als das maximal übertragbare Drehmoment bezeichnet. Je nach Bearbeitungsstrategie kann es am Werkzeug und über die mechanische Kopplung auch an angrenzenden Teilen zu Belastungen entlang der Drehachse (axial) kommen. Zu hohe Axialkräfte können ebenfalls zu einem Werkzeugauszug führen. Die theoretische Axialkraft, bei der erstmalig ein Lösen des geklemmten Schneidwerkzeugs oder anderen Komponenten des Spannmittels auftritt, wird als Auszugskraft bezeichnet. Für ein ideales Spannsystem sind üblicherweise ein möglichst geringer Rundlauffehler, ein möglichst hohes übertragbares Drehmoment und eine möglichst hohe Auszugskraft erwünscht.

Für die Spannung von Schneidwerkzeugen werden bekannterweise meist entweder formschlüssige oder kraftschlüssige Spanntechnologien verwendet. Bei formschlüssigen Systemen wird die Gefahr des Werkzeugauszugs durch den Formschluss mit Hilfe eines definierten geometrischen Merkmals zwischen dem Schneidwerkzeug und dem Spannmittel oder zwischen anderen Komponenten des Spannmittels verhindert. Gleichzeitig limitiert u.a. die aus dem geometrischen Merkmal resultierende Asymmetrie und die realisierbare Fertigungsgenauigkeit von notwendigen Funktionsflächen bekannterweise die mit einem formschlüssigen Gesamtsystem maximal erreichbare Präzision. Es ist weiter bekannt, dass u.a. aus diesem Grund für Präzisionsarbeiten meist kraftschlüssige Spannsysteme verwendet werden. Bei kraftschlüssigen Spannsystem wird die mechanische Klemmung des Schneidwerkzeugs neben der Formgebung der involvierten Kontaktpartner vorwiegend über den Reibkontakt zwischen den Reibpartnern definiert. Als Konsequenz reagieren kraftschlüssige Spannsysteme üblicherweise sehr sensitiv auf eine Beeinflussung der Reibverhältnisse zwischen den Reibpartnern, wie es bspw. bei einer Beschädigung der Oberflächenstruktur oder bei einer Kontaminierung der Funktionsflächen durch reibungsverändernde Feststoffe, beispielsweise Rückstände eines Zerspanungsprozesses, und/oder Flüssigkeiten, beispielsweise einen Kühlschmierstoff, der Fall sein kann.

Mechanische und/oder chemische Beschädigung und/oder eine Kontaminierung von Funktionsflächen bei Schneidwerkzeugen und Spannmitteln - im Folgenden als Störeinflüsse bezeichnet - haben einen negativen Einfluss auf die Spanngüte von Spannmitteln, sofern ein negativer Einfluss auf die Reibverhältnisse zwischen den Kontaktpartnern resultiert. Diese Reduktion der Spanngüte zeigt sich beispielsweise durch die Erhöhung des Rundlauffehlers, die Reduktion des maximal übertragbaren Drehmoments, die Reduktion der maximalen Auszugskraft oder durch eine beliebige Kombination ebendieser.

Während die Erhöhung des Rundlauffehlers infolge von Störeinflüssen üblicherweise vor einem Zerspanungsprozess durch eine Werkzeugvermessung ausserhalb oder innerhalb der Werkzeugmaschine erkannt werden kann, ist dies für die Reduktion des übertragbaren Drehmoments oder die Reduktion der Auszugskraft im Allgemeinen nicht möglich. Die Bestimmung dieser Werte ist vor dem Zerspanungsprozess mit wirtschaftlich vertretbarem Aufwand nur mechanisch durch die künstliche Aufbringung eines Drehmoments und/oder einer Axialkraft möglich. Da allerdings in beiden Fällen die Klemmverbindung zwischen dem Schneidwerkzeug und dem Spannmittel oder zwischen einzelnen Komponenten des Spannmittels zumindest teilweise gelöst wird, ist ein erneutes Einspannen notwendig, wodurch ein möglicherweise anderes Ausgangsresultat resultiert. Ausserdem kann es bei diesem Vorgehen zu Schäden an den involvierten Komponenten kommen, da gezielt eine partielle Überlastung des Spannsystems herbeigeführt wird.

Bestehende Lösungsansätze haben bisher zum Ziel, die Reibverhältnisse zwischen den relevanten Reibpartnern technologie- und fertigungsseitig zu verbessern, beispielsweise durch Änderung der Oberflächenstruktur oder durch konsequente Reinigung zur Vermeidung von Kontaminationen, oder stattdessen auf Kosten der damit verbundenen Nachteile auf ein formschlüssiges Spannsystem zu wechseln.

Der vorliegenden Erfindung liegt daher das Ziel zu Grunde, ein Verfahren und eine Vorrichtung zur Ermittlung der Spanngüte eines in einem Werkzeughalter aufgenommenen Werkzeugs bereitzustellen, wobei das Vorliegen von Störeinflüssen während dem Einspannprozess, das heisst während des Vorgangs, in welchem das Schneidwerkzeug und die Spannmittel von einem im losen oder teilweise losen Zustand vorliegenden Fall in einen kombinierten, gespannten Zustand transferiert werden, ermittelbar ist. Im Gegensatz zu bereits bestehenden Lösungen grenzt sich die hier beschriebene Erfindung damit ab, dass die Störeinflüsse, respektive die Auswirkungen der Störeinflüsse nicht im Maschinenbetrieb, das heisst üblicherweise während das Spannmittel mit dem Werkzeug und der Antriebsspindel der Werkzeugmaschine verbunden ist, sondern explizit im Rahmen der Werkzeugbereitstellung (Einspannung) ermittelt werden können.

### Zusammenfassung der Erfindung

Erfindungsgemäss werden diese Ziele vor allem durch den Gegenstand der unabhängigen Ansprüche erreicht. Weitere vorteilhafte Ausführungsformen gehen zudem aus den abhängigen Ansprüchen und der Beschreibung hervor.

Insbesondere wird ein Teil dieser Ziele erreicht durch ein Verfahren zur Ermittlung einer Spanngüte eines in einem Werkzeughalter aufgenommenen Werkzeugs, umfassend die Bereitstellung des Werkzeughalters und des Werkzeugs, die Bereitstellung einer Spanneinheit und die Bereitstellung einer Messvorrichtung, welche Messvorrichtung dazu eingerichtet ist, zumindest einen Anlagenparameter der Spanneinheit zu erfassen, aufzuzeichnen und zu verarbeiten. Wobei das Verfahren zudem folgende Schritte umfasst:
a) Vorbereitung des Werkzeughalters durch Einsetzen des Werkzeugs in den Werkzeughalter,
b) Einsetzen des vorbereiteten Werkzeughalters in die Spanneinheit,
c) Spannen des Werkzeugs im Werkzeughalter mittels der Spanneinheit, wobei während des Spannvorgangs mittels der Messvorrichtung zumindest ein Anlagenparameter erfasst wird, und
welches Verfahren dadurch gekennzeichnet ist, dass während Schritt c) ein zeitlicher Verlauf des zumindest einen Anlagenparameters aufgezeichnet wird, aus welchem zeitlichen Verlauf des zumindest einen Anlagenparameters eine Spanngüte eines in einem Werkzeughalter aufgenommenen Werkzeugs ermittelbar ist.

Der Spannvorgang in der Spanneinheit wird bis zu einem Zielspannwert ausgeführt. Konkret wird in Abhängigkeit der Werkzeugdimensionen, insbesondere des Werkzeugdurchmessers, ein Zielspannwert festgelegt, welcher notwendig ist, um den Werkzeughalter zu spannen, so dass die für einen sicheren Betrieb nötige Klemmkraft zwischen Werkzeughalter und Werkzeug vorliegt. Vorzugsweise findet diese Prozessregelung automatisiert statt, wobei beim Vorliegen von vergleichbaren Eingangsbedingungen, das heisst Zustand der Spanneinheit und Zustand weiterer, in den Spannprozess involvierten Komponenten, jeweils die gleichen Ausgangbedingungen respektive das gleiche Ausgangsresultat, insbesondere die Spanngüte, erwartet werden können. Im Umkehrschluss bedeutet dies, dass Änderungen in den Eingangsbedingungen - sofern signifikant - zu anderen Ausgangsbedingungen, respektive zu einem anderen Ausgangsresultat, insbesondere einer anderen Spanngüte, führen. Nicht signifikante Änderungen der Eingangsbedingungen führen hingegen zu keiner Änderung des Ausgangsresultats. Bei konventionellen, nicht automatisierten Spannsystemen ist durch die Tatsache, dass der Spannprozess üblicherweise manuell durch einen Anwender erfolgt, die Einhaltung bestimmter Zielwerte (z.B. der Zielspannwert) zwar durchaus wünschenswert, aber durch die alleinige Verantwortung beim Anwender keineswegs garantiert.

Faktisch bedeutet die Existenz von Störeinflüssen, vor allem von Schäden und/oder von einer Kontaminierung des Werkzeughalters und/oder des Werkzeugs, eine Veränderung der Eingangsbedingungen des oben beschriebenen Spannprozesses. Diese Art von veränderten Eingangsbedingungen führt zu einem anderen Ausgangsresultat, da beispielsweise das maximal übertragbare Drehmoment reduziert oder der Rundlauffehler erhöht - oder in anderen Worten die Spanngüte reduziert - werden. Die Frage, ab wann eine Veränderung der Eingangsbedingungen zu einem anderen Ausgangsresultat führt, hängt von unterschiedlichen Faktoren ab und kann nicht allgemeingültig beantwortet werden. Festgehalten werden kann allerdings, dass für jede Art von Störeinfluss oder Kombinationen von unterschiedlichen Störeinflüssen eine Schwelle existiert, bei deren Überschreitung von einem negativen Einfluss auf das Ausgangsresultat ausgegangen werden kann. Störeinflüsse, welche diese Schwelle erreichen oder überschreiten, werden im Folgenden als kritische oder signifikante Störeinflüsse bezeichnet.

Erfindungsgemäss wird im Rahmen des Spannprozesses mit Hilfe der Spanneinheit ein Werkzeug in einem Werkzeughalter gespannt. Zumindest ein Anlagenparameter der Spanneinheit kann während dieses Spannprozesses durch die Messvorrichtung erfasst, aufgezeichnet und als Funktion der Zeit analysiert werden. Es existiert mindestens ein Anlagenparameter, vorzugsweise mehrere Anlagenparameter, welcher nicht nur möglichst einfach und mit einer genügend grossen Abtastrate gemessen werden kann, sondern mit Blick auf dessen zeitlichen Verlauf mit dem Ausgangsresultat korreliert. Folglich unterscheidet sich der Spannprozess mit korrekt gereinigtem Werkzeughalter und Werkzeug von demjenigen mit verschmutztem Werkzeughalter und Werkzeug nicht nur in Bezug auf das Ausgangsresultat, insbesondere die Spanngüte, sondern auch in Bezug auf den zeitlichen Verlauf des oben genannten zumindest einen Anlagenparameters, sodass die Spanngüte aus dem zeitlichen Verlauf des zumindest einen Anlagenparameters ermittelbar ist. Vergleichbar kann diese Schlussfolgerungen für weitere Störeinflüsse gemacht werden. Der zumindest eine Anlagenparameter kann während des gesamten Spannprozesses oder nur während einer Teildauer des Spannprozesses erfasst werden, folglich stellt der zeitliche Verlauf des zumindest einen Anlagenparameters diesen Anlagenparameter über den gesamten Spannprozess hinweg dar oder nur über eine Teildauer des Spannprozesses.

In einer ersten Ausführungsform wird in Schritt c) des erfindungsgemässen Verfahrens der zeitliche Verlauf einer Vielzahl von Anlagenparametern und/oder einer Kombination von zumindest zwei Anlagenparametern aufgezeichnet, aus welchem zeitlichen Verlauf der Vielzahl von Anlagenparametern und/oder der Kombination von zumindest zwei Anlagenparametern die Spanngüte eines in einem Werkzeughalter aufgenommenen Werkzeugs ermittelbar ist. Durch die Ermittlung der Spanngüte eines in einem Werkzeughalter aufgenommenen Werkzeugs auf Basis einer Vielzahl von Anlagenparametern und/oder einer Kombination von zumindest zwei Anlagenparameters können die Genauigkeit und Robustheit der Ermittlung erhöht werden.

In vorteilhafter Weise kann der erfasste Anlagenparameter oder die erfassten Anlagenparameter einer Signalverarbeitung unterzogen werden, welche Signalverarbeitung insbesondere die Anwendung von Filter-, Transformations-, Normierungs-, Standardisierungs- und Resampling-Operationen umfasst. Es sind jedoch auch weitere, bekannte Signalverarbeitungsmethoden denkbar.

Bei den Filteroperationen wird beispielsweise durch Hoch- und Tiefpassfilter ein Messrauschen entfernt, respektive minimiert (Glättungseffekt). Bei Transformationsoperationen werden Anpassungen an den Messdaten vorgenommen, indem eine zuvor definierte Berechnungsregel auf die Gesamtheit der Daten angewendet und damit eine vorhersehbare Veränderung ebendieser realisiert wird. Bei Normierungs- und Standardisierungsoperationen werden für den weiteren Verlauf vorteilhafte Vereinheitlichungen der Messdaten realisiert. Bei Resampling-Operationen werden gleich getaktete und gleichlange Messsignale zwecks Weiterverarbeitung realisiert.

In ebenfalls vorteilhafter Weise wird die Beurteilung der Spanngüte in zumindest zwei Detaillierungsstufen unterteilt. In einer ersten Detaillierungsstufe wird die, aufgrund des zeitlichen Verlaufs von zumindest einem Anlagenparameter, ermittelte Spanngüte vereinfacht in zwei Klassen, beispielweise «gut» und «schlecht», aufgeteilt, unabhängig davon, welche Art von Störeinfluss für ein schlechtes Resultat verantwortlich ist. In einer zweiten Detaillierungsstufe wird die, aufgrund des zeitlichen Verlaufs des zumindest einen Anlagenparameters, ermittelte Spanngüte in eine endliche Liste von zuvor definierten Klassen aufgeteilt. Diese Aufteilung hat zur Folge, dass nicht nur das Resultat (gut/schlecht), sondern auch möglicherweise die Ursache für dieses Resultat aus der Kenntnis der Klassenzuordnung abgeleitet werden kann. Eine nicht abschliessende Liste von möglichen Klassen der zweiten Detaillierungsstufe umfasst beispielsweise die Klassen «Spannung in Ordnung», «kontaminiert durch Flüssigkeit», «kontaminiert durch Partikel», «kontaminiert durch Flüssigkeiten und Partikel», «mechanische Beschädigung am Werkzeughalter», «chemische Beschädigung am Werkzeughalter» und «mechanische und chemische Beschädigung am Werkzeughalter».

Gemäss einer weiteren Ausführungsform erfolgt die Ermittlung der Spanngüte mittels eines Algorithmus, insbesondere eines Algorithmus zum maschinellen Lernen. Da einerseits die Unterschiede zwischen dem zeitlichen Verlauf von zumindest einem Anlagenparameter mit und ohne signifikante Störeinflüsse marginal und andererseits die Anlagenparameter fertigungs- und anwendungsbedingt einer Streuung unterworfen sind, ist eine Einordnung durch visuelle Betrachtung des zeitlichen Verlaufs des zumindest einen Anlagenparameters oder durch den Vergleich einzelner beschreibender Parameter dieses Verlaufs (z.B. Steigung, Krümmung, Maximalwert) nicht zielführend.

Zu diesem Zweck kann ein Algorithmus, insbesondere ein Algorithmus zum maschinellen Lernen, angewandt werden, welchem der zeitliche Verlauf von zumindest einem Anlagenparameter und eine damit verbundene, anderweitig ermittelte Spanngüte, beispielsweise eine durch Messung des Rundlauffehlers, des maximal übertragbaren Drehmoments und/oder der Auszugskraft, als Daten bereitgestellt werden und welcher eine Funktion oder einen Zusammenhang beziehungsweise eine Abhängigkeit der Daten untereinander anhand von bekannten Zielwerten (Labels) und Datenpunkten (Features) beschreibt.

Das Anlernen des Algorithmus erfolgt über eine endliche Trainingsmenge mit bekannten Labels (gelabelte Daten), wodurch von einem überwachten Lernen gesprochen werden kann. Konkret bedeutet das, dass in einem ersten Schritt Labels und die hierfür zugrundeliegenden Rahmenbedingungen definiert und anschliessend auf dieser Basis kontrolliert Testdaten gesammelt werden. Beispielsweise wird eine endliche Menge von Testmessungen mit korrekt gereinigtem Werkzeughalter und Werkzeug durchgeführt, wobei fertigungstechnische Unterschiede (Fertigungstoleranzen) und Kopplungsabhängigkeiten, das heisst Abhängigkeit in der Kopplung von Werkzeughalter und einer Spindel, berücksichtigt werden.

In einem weiteren Schritt werden unter Einbezug verschiedener Störeinflüsse eine endliche Menge an Testmessungen der Spanngüte durchgeführt. Auf diese Art und Weise entsteht ein grosser Datensatz, der für das Anlernen des Modells verwendet werden kann. Durch die Tatsache, dass für jede Einzelmessung die Klassenzuordnung bekannt ist, handelt es sich um gelabelte Daten. Während des Lernprozesses des Algorithmus werden sogenannte Muster in den Daten erkannt, wodurch in einem weiteren Schritt eine Zuordnung zu den bekannten Klassen erfolgen kann.

In weiter vorteilhafter Weise ist auf Basis des aufgezeichneten zeitlichen Verlaufs des oder der Anlagenparameter eine prognostizierte Spanngüte bestimmbar. Durch Kenntnis des zeitlichen Verlaufs von zumindest einem Anlagenparameter ist eine Vorhersage für den zu erwartenden Wert der Spanngüte möglich. Dies kann insbesondere auch eine Vorhersage des maximal übertragbaren Drehmoments, des minimalen Rundlauffehlers und/oder der Auszugskraft beinhalten.

Vorteilhafterweise ist das Werkzeug ein Schaft-Schneidwerkzeug mit zumindest teilweise rotationssymmetrischem Schaft. Für unterschiedliche Zerspanungssituationen kommt eine grosse Vielfalt an Schneidwerkzeugen, insbesondere Schaft-Schneidwerkzeugen, zum Einsatz, welche sich u.a. im Schaftdurchmesser unterscheiden. Diese Tatsache hat dazu geführt, dass auch bei den Werkzeughaltern eine Abstufung je nach Grösse der einzusetzenden Schneidwerkzeuge zu finden ist. Jede Grösse ist nur mit einem begrenzten Bereich an Schaftdurchmessern kompatibel. Relevant für das Verfahren zur Ermittlung einer Spanngüte eines in einem Werkzeughalter aufgenommenen Werkzeugs ist vor allem, dass sich diese Werkzeughalter in ihrer Grösse, vor allem ihrem Durchmesser, unterscheiden und unterschiedliche Zielspannwerte sowie Kräfte zur Spannung bei der Verwendung der Spanneinheit erfordern.

In bevorzugter Weise ist der Werkzeughalter ein kraftschlüssiges Spannsystem, vorzugsweise ein reibschlüssiges Spannsystem, weiter vorzugsweise ein reibschlüssiges Spannsystem umfassend eine Spannzange mit einem Aussenkonus und einer zentralen Aussparung zur Aufnahme eines Werkzeugs und einen Spannzangenhalter mit einem Aufnahmekonus zwecks Klemmung und Fixierung eines Werkzeugs in der Spannzange, wobei der Aussenkonus der Spannzange und der Aufnahmekonus des Spannzangenhalters komplementär ausgebildet sind.

Bei Verwendung eines kraftschlüssigen Spannsystems können die Mantelfläche des im Werkzeughalter aufgenommenen Werkzeugs und zumindest die mit diesen Mantelflächen in Kontakt stehenden Kontaktflächen des Werkzeughalters als Funktionsflächen betrachtet werden. Ferner können Hilfskomponenten umfasst sein, als welche solche Komponenten bezeichnet werden, die zwischen dem Werkzeug und dem Werkzeughalter positioniert sind. Dazu zählen beispielsweise Spannzangen und Reduzierhülsen. Weiter gelten auch die Kontaktflächen zwischen dem Werkzeug und den Hilfskomponenten, sowie allfällige Kontaktflächen zwischen mehreren Hilfskomponenten als Funktionsflächen. Verunreinigungen und/oder Beschädigung einer oder mehrerer Funktionsflächen können hierbei die Spanngüte reduzieren.

Gemäss einer weiteren Ausführungsform der Erfindung ist der Anlagenparameter ein hydraulischer Druck, ein elektrischer Strom, eine elektrische Spannung oder ein akustisches Signal. Dem liegt die Erkenntnis zu Grunde, dass der zeitliche Verlauf eines hydraulischen Drucks, die zeitlichen Verläufe eines elektrischen Stroms, insbesondere eines von einem Elektromotor zum Betrieb einer Hydraulikpumpe aufgenommenen Motorstroms, eine elektrische Spannung, insbesondere eine von einem Elektromotor zum Betrieb einer Hydraulikpumpe aufgenommene Motorspannung, oder der zeitliche Verlauf eines mittels Mikrophon aufgenommenen akustischen Signals die oben beschriebenen Bedingungen für eine ideale Zustandsgrösse erfüllen. Konkret bedeutet das, dass genügend grosse Abweichungen in den zeitlichen Verläufen ebendieser Zustandsgrössen eine Veränderung des Ausgangsresultats, ergo eine Veränderung der Spanngüte bedeuten. Ursache hierfür ist, dass diese Zustandsgrössen, respektive die Ursache für deren veränderten Verlauf ähnlich sensitiv auf Störeinflüsse reagieren, wie es auch die Spanngüte tut.

Ein zweiter Teil der Erfindung wird erreicht durch eine Vorrichtung zur Ermittlung einer Spanngüte eines in einem Werkzeughalter aufgenommenen Werkzeugs nach dem erfindungsgemässen Verfahren, welche Vorrichtung eine Messvorrichtung umfasst, welche Messvorrichtung dazu eingerichtet ist, zumindest einen Anlagenparameter einer Spanneinheit zu erfassen, aufzuzeichnen und zu verarbeiten. Es ist denkbar, dass eine Spanneinheit oder ein Werkzeughalter selbst eine solche Vorrichtung zur Ermittlung einer Spanngüte und insbesondere eine Messvorrichtung umfassen. Alternativ kann die Vorrichtung zur Ermittlung einer Spanngüte als von der Spanneinheit und/oder dem Werkzeughalter separate Vorrichtung ausgebildet und mit der Spanneinheit und/oder dem Werkzeughalter verbunden sein.

Ein weiterer Aspekt der vorliegenden Erfindung bezieht sich auf eine Vorrichtung zur Spannung eines Werkzeugs in einem Werkzeughalter umfassend eine Spanneinheit, wobei das Werkzeug in den Werkzeughalter einsetzbar und mittels der Spanneinheit in diesem spannbar ist, welche Vorrichtung dadurch gekennzeichnet ist, dass sie ferner eine Vorrichtung zur Ermittlung einer Spanngüte des in dem Werkzeughalter aufgenommenen Werkzeugs umfasst. Die Vorrichtung zur Spannung eines Werkzeugs kann ferner eine geregelte oder ungeregelte Steuerung zur Steuerung des Spannvorgangs umfassen oder der Spannvorgang kann manuell erfolgen.

Der Spannvorgang ist zum besseren Verständnis bis anhin vereinfacht als Vorgang zum Spannen eines Werkzeugs in einem Werkzeughalter beschrieben sollte jedoch nicht als darauf beschränkt betrachtet werden. Das erfindungsgemässe Verfahren und die erfindungsgemässe Vorrichtung sind ebenso geeignet um die Spanngüte eines bereits in einem Werkzeughalter aufgenommenen Werkzeugs während des Entspannens des Werkzeugs aus dem Werkzeughalter zu ermitteln.

### Kurzbeschreibung der Zeichnungen

Es zeigt
Figur 1 eine schematische Darstellung einer Ausführungsform des Verfahrens zur Ermittlung einer Spanngüte eines in einem Werkzeughalter aufgenommenen Werkzeugs, und
Figur 2 eine schematische Darstellung einer Ausführungsform einer Vorrichtung zur Spannung eines Werkzeugs in einem Werkzeughalter umfassend eine Vorrichtung zur Ermittlung einer Spanngüte des in dem Werkzeughalter aufgenommenen Werkzeugs.

### Bevorzugte Ausführungsformen der Erfindung

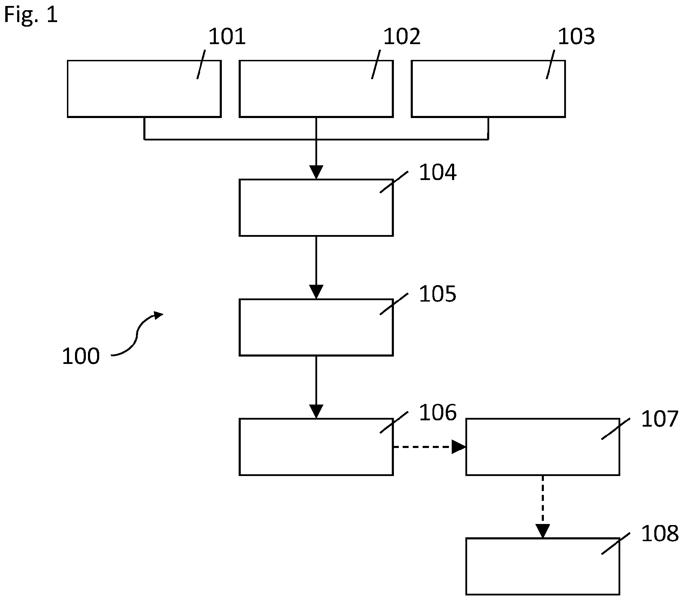

Figur 1 zeigt schematisch den Ablauf des Verfahrens 100 nach einer Ausführungsform der Erfindung.

Das Verfahren 100 umfasst die Schritte 101 bis 108. Die vorbereitenden Schritte 101 bis 103 umfassen Schritt 101, wobei der Werkzeughalter 10 und das Werkzeug 20 bereitgestellt werden, Schritt 102, wobei die Spanneinheit 30 bereitgestellt wird und Schritt 103, wobei eine Messvorrichtung 40 bereitgestellt wird, welche Messvorrichtung 40 dazu eingerichtet ist, zumindest einen Anlagenparameter der Spanneinheit 30 zu erfassen, aufzuzeichnen und zu verarbeiten.

Das Verfahren 100 umfasst ferner Schritt 104, wobei der Werkzeughalter 10 durch Einsetzen des Werkzeugs 20 in den Werkzeughalter 10 vorbereitet wird, und Schritt 105, wobei der vorbereitete Werkzeughalter 10 in die Spanneinheit 30 eingesetzt wird.

In Schritt 106 wird das Werkzeug 20 im Werkzeughalter 10 mittels der Spanneinheit 30 gespannt, wobei während des Spannvorgangs mittels der Messvorrichtung 40 zumindest ein Anlagenparameter erfasst wird. Während des Spannvorgangs erfolgt zudem Schritt 107, wobei ein zeitlicher Verlauf des zumindest einen Anlagenparameters aufgezeichnet wird, aus welchem zeitlichen Verlauf des zumindest einen Anlagenparameters die Spanngüte des in dem Werkzeughalter 10 aufgenommenen Werkzeugs 20 ermittelbar ist. Das Verfahren 100 umfasst zudem Schritt 108, wobei aus dem zeitlichen Verlauf des zumindest einen Anlagenparameters die Spanngüte des in dem Werkzeughalter 10 aufgenommenen Werkzeugs 20 ermittelt wird. Schritt 108 kann hierbei im Wesentlichen gleichzeitig mit oder zeitversetzt zu Schritt 107 erfolgen. An die Ermittlung der Spanngüte während Schritt 108 können sich weitere, zeitgleich oder zeitversetzt ausgeführte, Schritte (nicht dargestellt) anschliessen, wobei in diesen weiteren Schritte beispielsweise eine Beurteilung der ermittelten Spanngüte erfolgt.

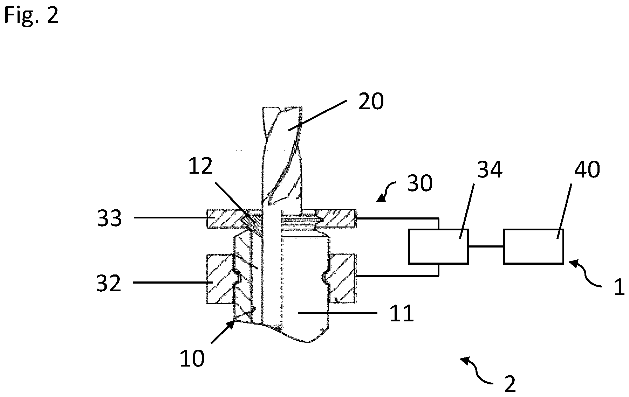

Figur 2 zeigt schematisch die Vorrichtung 2 zur Spannung des Werkzeugs 20 in dem Werkzeughalter 10 umfassend die Spanneinheit 30, welche Spanneinheit 30 den Futteradapter 32, den Hülsenhalter 33 und die Spannvorrichtung 34 umfasst.

Der beispielhafte Werkzeughalter 10 ist ein reibschlüssiges Spannsystem und umfasst die Spannzange 12 und den Spannzangenhalter 11. Zur Spannung des Werkzeugs 20 in dem Werkzeughalter 10 wird das Werkzeug 20 in die Spannzange 12 eingesetzt und die Spannzange 12 in den Spannzangenhalter 11 eingepresst. Zu diesem Zweck ist der Hülsenhalter 33 mit der Spannzange 12 und der Futteradapter 32 mit dem Spannzangenhalter 11 verbunden und die die Spannvorrichtung 34 ist eingerichtet den Futteradapter 32 und den Hülsenhalter 33 derart zu manipulieren, dass die Spannzange 12 in den Spannzangenhalter 11 eingepresst wird. Dieser Vorgang ist als Spannvorgang zu verstehen.

Die Vorrichtung 2 umfasst ferner eine Vorrichtung zur Ermittlung einer Spanngüte 1 des in dem Werkzeughalter 10 aufgenommenen Werkzeugs 20. Die Vorrichtung zur Ermittlung einer Spanngüte 1 umfasst die Messvorrichtung 40, welche Messvorrichtung 40 dazu eingerichtet und derart mit der Spannvorrichtung 34 verbunden ist, zumindest einen Anlagenparameter der Spanneinheit 30 zu erfassen, aufzuzeichnen und zu verarbeiten.

## Patentansprüche

1. Verfahren (100) zur Ermittlung einer Spanngüte eines in einem Werkzeughalter (10) aufgenommenen Werkzeugs (20), umfassend
- Bereitstellung des Werkzeughalters (10) und des Werkzeugs (20),
- Bereitstellung einer Spanneinheit (30),
- Bereitstellung einer Messvorrichtung (40), welche Messvorrichtung (40) dazu eingerichtet ist, zumindest einen Anlagenparameter (31) der Spanneinheit (30) zu erfassen, aufzuzeichnen und zu verarbeiten,
wobei das Verfahren (100) zudem folgende Schritte umfasst
a. Vorbereitung des Werkzeughalters (10) durch Einsetzen des Werkzeugs (20) in den Werkzeughalter (10),
b. Einsetzen des vorbereiteten Werkzeughalters (10) in die Spanneinheit (30),
c. Spannen des Werkzeugs (20) im Werkzeughalter (10) mittels der Spanneinheit (30), wobei während des Spannvorgangs mittels der Messvorrichtung (40) zumindest ein Anlagenparameter (31) erfasst wird, und
welches Verfahren (100) **dadurch gekennzeichnet ist, dass** während Schritt c) ein zeitlicher Verlauf des zumindest einen Anlagenparameters (31) aufgezeichnet wird, aus welchem zeitlichen Verlauf des zumindest einen Anlagenparameters (31) die Spanngüte eines in einem Werkzeughalter (10) aufgenommenen Werkzeugs (20) ermittelbar ist.

2. Verfahren (100) nach Anspruch 1 oder 2, **dadurch gekennzeichnet, dass** in Schritt c) der zeitliche Verlauf einer Vielzahl von Anlagenparametern (31) und/oder einer Kombination von zumindest zwei Anlagenparametern (31) aufgezeichnet wird, aus welchem zeitlichen Verlauf der Vielzahl von Anlagenparametern (31) und/oder der Kombination von zumindest zwei Anlagenparametern (31) die Spanngüte eines in einem Werkzeughalter (10) aufgenommenen Werkzeugs (20) ermittelbar ist.

3. Verfahren (100) nach einem der vorhergehenden Ansprüche, **dadurch gekennzeichnet, dass** der erfasste Anlagenparameter (31) oder die erfassten Anlagenparameter (31) einer Signalverarbeitung unterzogen wird bzw. werden.

4. Verfahren (100) nach einem der vorhergehenden Ansprüche, **dadurch gekennzeichnet, dass** die Spanngüte in zumindest zwei Detaillierungsstufen unterteilt wird.

5. Verfahren (100) nach einem der vorhergehenden Ansprüche, **dadurch gekennzeichnet, dass** die Ermittlung der Spanngüte mittels eines Algorithmus, insbesondere eines Algorithmus zum maschinellen Lernen, erfolgt.

6. Verfahren (100) nach einem der vorhergehenden Ansprüche, **dadurch gekennzeichnet, dass** auf Basis des aufgezeichneten zeitlichen Verlaufs des oder der Anlagenparameter (31) eine prognostizierte Spanngüte bestimmbar ist.

7. Verfahren (100) nach einem der vorhergehenden Ansprüche, **dadurch gekennzeichnet, dass** das Werkzeug (20) ein Schaft-Schneidwerkzeug mit zumindest teilweise rotationssymmetrischem Schaft ist.

8. Verfahren (100) nach einem der vorhergehenden Ansprüche, **dadurch gekennzeichnet, dass** der Werkzeughalter (10) ein kraftschlüssiges Spannsystem ist.

9. Verfahren (100) nach Anspruch 1, **dadurch gekennzeichnet, dass** der Anlagenparameter (31) ein hydraulischer Druck, ein elektrischer Strom, eine elektrische Spannung oder ein akustisches Signal ist.

10. Vorrichtung (1) zur Ermittlung einer Spanngüte eines in einem Werkzeughalter (10) aufgenommenen Werkzeugs (20) nach einer Methode gemäss einem oder mehreren der Ansprüche 1 bis 9, umfassend eine Messvorrichtung (40), welche Messvorrichtung (40) dazu eingerichtet ist, zumindest einen Anlagenparameter (31) einer Spanneinheit (30) zu erfassen, aufzuzeichnen und zu verarbeiten.

11. Vorrichtung (2) zur Spannung eines Werkzeugs (20) in einem Werkzeughalter (10) umfassend eine Spanneinheit (30), wobei das Werkzeug (20) in den Werkzeughalter (10) einsetzbar und mittels der Spanneinheit (30) in diesem spannbar ist und welche Vorrichtung (2) **dadurch gekennzeichnet ist, dass** sie ferner eine Vorrichtung (1) zur Ermittlung einer Spanngüte des in dem Werkzeughalter (10) aufgenommenen Werkzeugs (20) nach Anspruch 10 umfasst.

## Geänderte Patentansprüche

### Geänderte Patentansprüche gemäss Regel 137(2) EPÜ.

1. Verfahren (100) zur Ermittlung einer Spanngüte eines in einem Werkzeughalter (10) aufgenommenen Werkzeugs (20), umfassend
- Bereitstellung des Werkzeughalters (10) und des Werkzeugs (20),
- Bereitstellung einer Spanneinheit (30),
- Bereitstellung einer Messvorrichtung (40), welche Messvorrichtung (40) dazu eingerichtet ist, zumindest einen Anlagenparameter (31) der Spanneinheit (30) zu erfassen, aufzuzeichnen und zu verarbeiten,
wobei das Verfahren (100) zudem folgende Schritte umfasst
a. Vorbereitung des Werkzeughalters (10) durch Einsetzen des Werkzeugs (20) in den Werkzeughalter (10),
b. Einsetzen des vorbereiteten Werkzeughalters (10) in die Spanneinheit (30),
c. Spannen des Werkzeugs (20) im Werkzeughalter (10) mittels der Spanneinheit (30), wobei während des Spannvorgangs mittels der Messvorrichtung (40) zumindest ein Anlagenparameter (31) erfasst wird, und
welches Verfahren (100) **dadurch gekennzeichnet ist, dass** während Schritt c) ein zeitlicher Verlauf des zumindest einen Anlagenparameters (31) aufgezeichnet wird, aus welchem zeitlichen Verlauf des zumindest einen Anlagenparameters (31) die Spanngüte eines in einem Werkzeughalter (10) aufgenommenen Werkzeugs (20) ermittelbar ist.

2. Verfahren (100) nach Anspruch 1 oder 2, **dadurch gekennzeichnet, dass** in Schritt c) der zeitliche Verlauf einer Vielzahl von Anlagenparametern (31) und/oder einer Kombination von zumindest zwei Anlagenparametern (31) aufgezeichnet wird, aus welchem zeitlichen Verlauf der Vielzahl von Anlagenparametern (31) und/oder der Kombination von zumindest zwei Anlagenparametern (31) die Spanngüte eines in einem Werkzeughalter (10) aufgenommenen Werkzeugs (20) ermittelbar ist.

3. Verfahren (100) nach einem der vorhergehenden Ansprüche, **dadurch gekennzeichnet, dass** der erfasste Anlagenparameter (31) oder die erfassten Anlagenparameter (31) einer Signalverarbeitung unterzogen wird bzw. werden.

4. Verfahren (100) nach einem der vorhergehenden Ansprüche, **dadurch gekennzeichnet, dass** die Spanngüte in zumindest zwei Detaillierungsstufen unterteilt wird.

5. Verfahren (100) nach einem der vorhergehenden Ansprüche, **dadurch gekennzeichnet, dass** die Ermittlung der Spanngüte mittels eines Algorithmus, insbesondere eines Algorithmus zum maschinellen Lernen, erfolgt.

6. Verfahren (100) nach einem der vorhergehenden Ansprüche, **dadurch gekennzeichnet, dass** auf Basis des aufgezeichneten zeitlichen Verlaufs des oder der Anlagenparameter (31) eine prognostizierte Spanngüte bestimmbar ist.

7. Verfahren (100) nach einem der vorhergehenden Ansprüche, **dadurch gekennzeichnet, dass** das Werkzeug (20) ein Schaft-Schneidwerkzeug mit zumindest teilweise rotationssymmetrischem Schaft ist.

8. Verfahren (100) nach einem der vorhergehenden Ansprüche, **dadurch gekennzeichnet, dass** der Werkzeughalter (10) ein kraftschlüssiges Spannsystem ist.

9. Verfahren (100) nach Anspruch 1, **dadurch gekennzeichnet, dass** der Anlagenparameter (31) ein hydraulischer Druck, ein elektrischer Strom, eine elektrische Spannung oder ein akustisches Signal ist.

10. Vorrichtung (1) zur Ermittlung einer Spanngüte eines in einem Werkzeughalter (10) aufgenommenen Werkzeugs (20) nach einer Methode gemäss einem oder mehreren der Ansprüche 1 bis 9, umfassend eine Messvorrichtung (40), welche Messvorrichtung (40) dazu eingerichtet ist, zumindest einen Anlagenparameter (31) einer Spanneinheit (30) zu erfassen, aufzuzeichnen und zu verarbeiten.

11. Vorrichtung (2) zur Spannung eines Werkzeugs (20) in einem Werkzeughalter (10) umfassend eine Spanneinheit (30), wobei das Werkzeug (20) in den Werkzeughalter (10) einsetzbar und mittels der Spanneinheit (30) in diesem spannbar ist und welche Vorrichtung (2) **dadurch gekennzeichnet ist, dass** sie ferner eine Vorrichtung (1) zur Ermittlung einer Spanngüte des in dem Werkzeughalter (10) aufgenommenen Werkzeugs (20) nach Anspruch 10 umfasst.
